# EUROPÄISCHE PATENTANMELDUNG

(11) **EP 1 630 488 A1**
(43) Veröffentlichungstag der Anmeldung: **01.03.2006**
(21) Anmeldenummer: 04292053.8
(22) Anmeldetag: 13.08.2004
(51) Int. Cl.: F24H 3/04, F24H 9/18, B60H 1/22

(54) **Heizungsanordnung mit elektrischen Heizelementen, insbesondere für ein Kraftfahrzeug**

(71) Anmelder: Behr France Rouffach SAS, 68250 Rouffach (FR)
(72) Erfinder: Brun, Michel, 68740 Rustenhart (FR); Eckerlen, Gerard, 68250 Rouffach (FR); Gogmos, Erwan, 56600 Lanester (FR); Miss, Pascal, 67600 Sélestat (FR); Mougey, Mathieu, 68190 Ensisheim (FR); Robin, Nicolas, 67000 Strasbourg (FR)
(74) Vertreter: Grauel, Andreas

(57) **Zusammenfassung**

Die Erfindung betrifft eine Heizungsanordnung (1), insbesondere für ein Kraftfahrzeug, die zumindest zwei Baugruppen (11, 12, 13, 14) umfasst, wobei eine Baugruppe zumindest einen Heizstrang 8 umfasst, Kontaktelementen (3) und zumindest einem Element zur Wärmeübertragung (6), wobei zumindest eine erste Baugruppe (11, 12) von einer Niederspannungsquelle und zumindest eine zweite Baugruppe (13, 14) von einer Hochspannungsquelle versorgt wird.

## Beschreibung

Die Erfindung betrifft eine Heizungsanordnung mit elektrischen Heizelementen, insbesondere für ein Kraftfahrzeug, gemäß dem Oberbegriff des Anspruchs 1.

Aus der DE 101 44 757 A1 ist eine Heizungsanordnung mit einem PTC-Element für Personenfahrzeuge bekannt, wobei eine Zusatzheizung mit einem Heizkörper, der im Betrieb der Zusatzheizung von Heizluft durchströmt wird, und mit mindestens einer Luftaustrittsöffnung im Fußbereich eines Fahrgastraumes versehen ist, zu der die Heizluft geleitet wird. Um auf flexible Weise eine vertikale Temperaturschichtung im Fahrgastraum erzeugen zu können, die insbesondere auch an Sitzen im Fond als angenehm empfunden wird, ist der Heizkörper als ein elektrisches PTC-Element gestaltet, welches unmittelbar an der Luftaustrittsöffnung im Fußbereich angeordnet ist. Gemäß einem offenbarten Ausführungsbeispiel ist ein PTC-Element in Gestalt mehrerer Heizwaben in einem nicht näher beschriebenen Kunststoff-Rahmen angeordnet, der die Luftaustrittsöffnung einfasst.

Die elektrischen Zuheizer werden insbesondere auch für eine Kompensation der mangelnden Heizleistung resultierend aus der niedrigen Abwärme moderner Fahrzeugmotoren oder zur Komfortsteigerung für eine schnelle Innenraumaufheizung eingesetzt. Diese elektrischen Zuheizer, beispielsweise PTC-Zuheizer, werden bei laufendem Motor durch das Bordnetz versorgt. Für einen motorunabhängigen Betrieb werden diese PTC-Zuheizer aufgrund der hohen Leistungsaufnahme nicht eingesetzt. Zudem sind die herkömmlichen PTC-Zuheizer nur für den Betrieb mit einem Spannungspotential ausgelegt.

Für die Fahrzeugvorwärmung sind zusätzliche Geräte erhältlich, die nachträglich im Fahrzeuginnenraum angebracht werden und über eine Spannung aus dem öffentlichen Energieversorgungsnetz betrieben werden. Bei diesen nachträglich eingebauten Zusatzgeräten werden vorhandene Komponenten der Fahrzeugklimaanlage nicht genutzt.

In der nicht vorveröffentlichten deutschen Patentanmeldung mit dem Aktenzeichen DE 103 55 396.7 ist eine Kraftfahrzeug-Klimaanlage mit Standheizung beschrieben, die im Falle eines Kraftfahrzeug-Motor-Stillstands durch eine externe zweite Energieversorgung, insbesondere zur Energieversorgung von PTC-Heizelementen, mit Energie versorgt wird, wobei eine Vorrichtung zum Umschalten zwischen einer ersten Energieversorgung, die beispielsweise von einem Kraftfahrzeugmotor erzeugte Energie über ein Bordnetz zur Verfügung stellt, oder der externen zweiten Energieversorgung vorgesehen ist.

In der DE 100 25 713 A1 ist ein Heizsystem, insbesondere für Kraftfahrzeuge beschrieben, mit mindestens einem mittels einer ersten Energiequelle betriebenen ersten Heizgerät und mindestens einem mittels einer zweiten Energiequelle betriebenen zweiten Heizgeräts. Als Heizgeräte sind unter anderem PTC-Elemente aufgeführt die beispielsweise über eine Batterie oder einen Netzanschluss betrieben werden.

Es ist Aufgabe der Erfindung, eine verbesserte Heizungsanordnung mit elektrischen Heizelementen, insbesondere PTC-Elementen zur Verfügung zu stellen, die über verschieden Spannungsquellen betreibbar sind, ohne einen aufwändigen Umschaltmechanismus vorzusehen und in kompakter Form angeordnet sind.

Diese Aufgabe wird gelöst durch eine Heizungsanordnung mit elektrischen Heizelementen, insbesondere PTC-Elementen mit den Merkmalen des Anspruchs 1. Vorteilhafte Ausgestaltungen sind Gegenstand der Unteransprüche.

Erfindungsgemäß ist eine Heizungsanordnung, insbesondere für ein Kraftfahrzeug, mit zumindest zwei Baugruppen ausgebildet, wobei eine Baugruppe zumindest einen Heizstrang umfasst, mit zumindest einem elektrischen Heizelement, insbesondere PTC-Element, Kontaktelementen und zumindest einem Element zur Wärmeübertragung und wobei zumindest eine erste Baugruppe von einer Niederspannungsquelle und zumindest eine zweite Baugruppe von einer Hochspannungsquelle versorgt wird. Vorteilhafterweise weist ein Heizstrang eine Mehrzahl von Heizelementen auf, wobei ein Heizelement zwischen zwei Kontaktelementen angeordnet ist. Bevorzugt sind die Kontaktelemente in Form von Kontaktblechen und die Elemente zur Wärmeübertragung als Wellrippen oder als Bleche, die im Wesentlichen senkrecht zur Längsrichtung der Heizelemente angeordnet sind, ausgebildet.

Vorteilhafterweise wird als Niederspannungsquelle für die Niederspannungsbaugruppen die Kraftfahrzeugbordnetzspannung eingesetzt und für die Versorgung der Hochspannungsbaugruppen die Netzspannung, beispielsweise eines öffentlichen Versorgungsnetzes. Die Bordnetzspannung liegt üblicherweise bei Werten zwischen 12 ± 2 V und 14 ± 2V. Alternativ dazu kann diese auch bei höheren Spannungen wie beispielsweise 24 ± 2 V oder 48 ± 2V liegen. Die Netzspannung, die zur Versorgung der Hochspannungsbaugruppen dient ist abhängig vom Betreiberland und beträgt beispielsweise 110 ± 10 V oder 230 ± 20 V. Eine Umschaltung zwischen unterschiedlichen Netzspannungen verschiedener Länder kann beispielsweise mittels einer Umschaltvorrichtung am Fahrzeug oder mittels entsprechender Adapter vorgenommen werden. Im normalen Fahrbetrieb wird die Heizanordnung üblicherweise über das Bordnetz versorgt. Für den Fall des Fahrzeugsstillstands wird die Heizungsanordnung durch Anschluss an eine Steckdose, beispielsweise an Rastplätzen, mit Strom versorgt. Vorteilhafterweise wird mittels der Netzspannung auch ein Gebläse zur Förderung der Luft angetrieben. Insbesondere bei tiefen Temperaturen, kann das Fahrzeug vor Inbetriebnahme durch Anschließen an eine Steckdose vorgeheizt werden.

Besonders bevorzugt sind zumindest zwei Baugruppen zu einer Baueinheit zusammengefasst oder miteinander verbunden und/oder von einem Halteelement oder Rahmen gehalten beziehungsweise mittels eines solchen fixiert. Insbesondere werden Niederspannungs- und Hochspannungsbaugruppen von voneinander getrennten Halteelementen oder Rahmen gehalten und/oder sind in diese eingelegt. Vorzugsweise sind Halteelemente oder Rahmen, beispielsweise über ein Verbindungselement miteinander verbunden. Als Verbindungselement ist insbesondere ein Zwischenrahmen vorteilhaft einsetzbar. Die Niederspannungsbaugruppen und Hochspannungsbaugruppen sind durch die Fixierung mittels der Halteelemente oder Rahmen und/oder des Verbindungselements oder des Zwischenrahmens elektrisch voneinander isoliert ausgebildet.

Halteelemente oder Rahmen und/oder das Verbindungselement oder der Zwischenrahmen sind insbesondere als spritzgegossene Kunststoff-Teile ausgeführt.

In einer weiteren vorteilhaften erfindungsgemäßen Ausgestaltung der Heizungsanordnung sind zumindest zwei Niederspannungsbaugruppen und/oder zumindest zwei Hochspannungsbaugruppen spiegelbildlich angeordnet und/oder im Wesentlichen gleich aufgebaut.

Da sowohl Niederspannungs- als auch Hochspannungsbaugruppen, die für verschiedene Heizungsanordnungen bevorzugt identisch oder zumindest mit gleichen Unterbaugruppen ausgebildet sind, in einer großen Stückzahl hergestellt werden können, können die Herstellungskosten gesenkt und die Logistik vereinfacht werden. Da eine Vielzahl gleicher Teile verwendet wird, die gegebenenfalls unterschiedlich zusammengesetzt werden, lassen sich zudem Varianten optimieren, d.h. die Position der PTC-Elemente kann an die Erfordernisse, d.h. an den Verlauf der Luftströmung, optimal angepasst werden.

Der Rahmen zur Aufnahme der Baugruppen weist vorzugsweise eine als Trennwand dienende Querstrebe auf, welche zwei benachbarte Baugruppen voneinander räumlich und/oder thermisch oder elektrisch trennt. Die Querstrebe ist bevorzugt in einer Symmetrieebene des Rahmens angeordnet. Insbesondere im Falle einer mehrzonigen Klimaanlage ist zur Trennung der Luftströme bevorzugt senkrecht zu einer ersten, parallel zu den Baugruppen verlaufenden Querstrebe eine zweite Querstrebe vorgesehen. Entsprechend weist auch insbesondere der Zwischenrahmen eine als Trennung dienende Querstrebe auf, welche im Wesentlichen fluchtend zu einer Querstrebe eines Rahmens angeordnet ist.

Der Rahmen zur Aufnahme der Baugruppen ist bevorzugt aus mindestens zwei Rahmenelementen ausgebildet. Dabei sind die einzelnen Rahmenelemente bevorzugt mittels Clipsverbindungen miteinander verbunden, wodurch eine sehr einfache und schnelle Montage ohne Werkzeug möglich ist.

Jede Baugruppe weist vorzugsweise mindestens zwei Kontaktbleche auf, an welchen seitlich ein Element zur elektrischen Kontaktierung angebracht ist. Dabei sind die Kontaktbleche, die mit den Elementen zur Kontaktierung verbunden sind, gleich ausgebildet wie die anderen Kontaktbleche der Baugruppe. An den Elementen zur Kontaktierung sind bevorzugt Federzungen zur Verbesserung der elektrischen Kontaktierung vorgesehen. Diese können für Nieder- und Hochspannungsbaugruppen, angepasst an die unterschiedlichen Ströme verschieden ausgebildet sein.

Die Baugruppe weist vorzugsweise mindestens zwei Wellrippen auf, welche auf der Außenseite zweier Kontaktbleche zwischen denen ein PTC-Element vorgesehen ist, angeordnet sind. Die Baugruppe kann um eine, zwei oder gegebenenfalls mehr Wellrippen erweitert werden, wobei bevorzugt zwischen zwei Wellrippen ein Kontaktblech vorgesehen ist. Dies ermöglicht bei identischem Aufbau des Kernbereichs eine relativ variable Gestaltung der Breite der Baugruppe. Die Heizungsanordnung kann sowohl gemeinsam geregelte als auch, insbesondere im Falle von mehrzonigen Klimaanlagen, unabhängig voneinander geregelte Heizstränge oder Baugruppen umfassen.

Die elektrische Kontaktierung der Kontaktelemente erfolgt bevorzugt mit Hilfe einer seitlich am Rahmen vorgesehenen Abdeckung, welche einen Teil des Rahmens bildet. Diese ist vorzugsweise auch mittels Clipsverbindungen befestigt. Auf der Außenseite der Abdeckung sind vorzugsweise Stecker vorgesehen.

Die elektrische Ansteuerung der Nieder- und/oder Hochspannungsbaugruppen beziehungsweise der Heizstränge kann über einen elektronischen Regler der integriert an der Heizungsanordnung, insbesondere innerhalb einer Abdeckung angeordnet ist, erfolgen. Alternativ kann zumindest eine der Baugruppen auch von außen beispielsweise über eine Relaisschaltung angesteuert werden.

Im Folgenden wird die Erfindung anhand von zwei Ausführungsbeispielen unter Bezugnahme auf die Zeichnung im Einzelnen erläutert. In der Zeichnung zeigen:
- Fig. 1: eine perspektivische Ansicht zweier Niederspannungsbaugruppen eines Teils einer Heizungsanordnung,
- Fig. 2: eine perspektivische Ansicht der Niederspannungsbaugruppen in einem teilmontierten Zustand in einem Rahmen,
- Fig. 3: eine perspektivische Ansicht zweier Hochspannungsbaugruppen eines Teils einer Heizungsanordnung,
- Fig. 4: eine perspektivische Ansicht der Hochspannungsbaugruppen in einem teilmontierten Zustand in einem Rahmen,
- Fig. 5: eine perspektivische Ansicht einer erfindungsgemäßen Heizanordnung mit Nieder- und Hochspannungsbaugruppen und einem Zwischenrahmen im teilmontierten Zustand,
- Fig. 6: eine perspektivische Ansicht der Anordnung nach Fig. 5 im zusammengebauten Zustand,

- Fig. 7: eine perspektivische Ansicht der Heizungsanordnung gemäß Fig. 6 mit elektronischer Regel- und Steuereinheit.

Eine PTC-Heizungsanordnung 1, die als Zuheizer in einer zweizonigen Kraftfahrzeug-Klimaanlage in Luftströmungsrichtung gesehen nach einem herkömmlichen Heizer angeordnet ist, ist in einem erfindungsgemäßen Ausführungsbeispiel durch zwei Baugruppen 11 und 12 die mit einer Bordnetzspannung versorgt werden und zwei Baugruppen 13 und 14, die mit einer Netzspannung versorgt werden, gebildet.

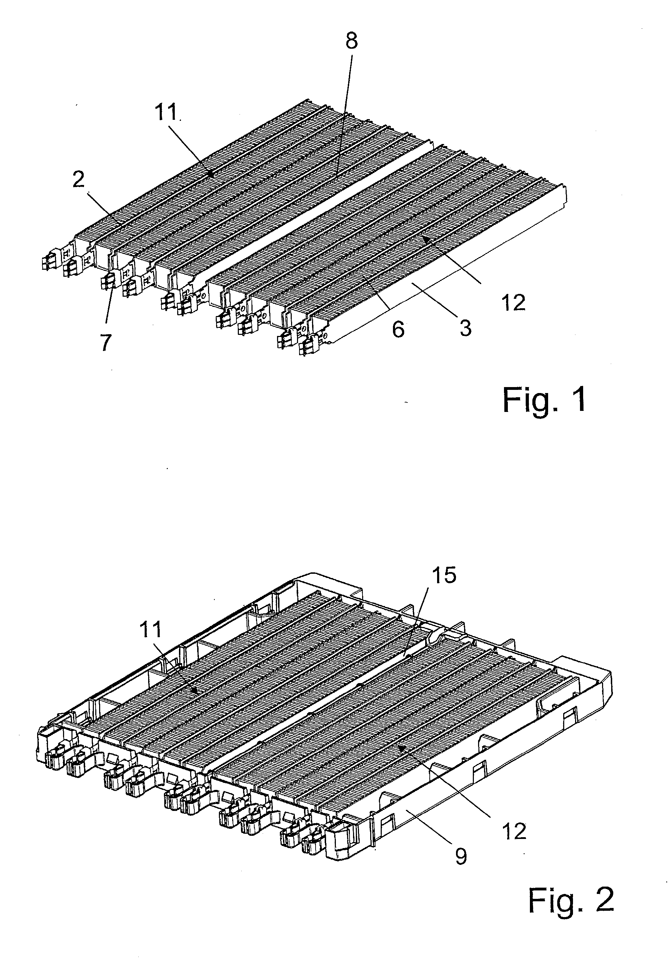

Die in Fig. 1 dargestellten Baugruppen 11 und 12 bestehen aus einer Mehrzahl von Keramik-PTC-Elementen 2, Kontaktblechen 3 und Wellrippen 6. Ein Keramik-PTC-Element 2 ist zwischen zwei parallel zueinander angeordneten Kontaktblechen 3 eingeklebt, vorliegend mittels eines elektrisch leitenden Klebstoffes (nicht dargestellt). Alternativ kann beispielsweise auch eine Lot-Verbindung vorgesehen sein. Auf den jeweils dem PTC-Element 2 gegenüberliegenden Seiten der Kontaktbleche 3 sind mittels einer entsprechenden Klebe-Verbindung Wellrippen 6 angebracht, die wiederum auf der dem PTC-Element 2 abgewandten Seite mit einem weiteren Kontaktblech 3 entsprechend verbunden sind. Die dargestellten Baugruppen 11 und 12 sind im Wesentlichen spiegelbildlich ausgebildet.

Vorliegend sind, wie in Fig. 1 dargestellt, für jede Baugruppe 11 und 12, vier PTC-Elemente 2 vorgesehen, die jeweils zwischen zwei Kontaktblechen 3 angeordnet sind, welche wiederum von Wellrippen 6 getrennt sind, wobei teilweise auch zwischen zwei Wellrippen 6 nur ein Kontaktblech 3 ohne PTC-Element 2 vorgesehen ist. Verschiedene Kontaktbleche 3 sind auf einer Seite durch Anbringung eines Elements zur Kontaktierung 7 verlängert ausgebildet, so dass sie der elektrischen Kontaktierung dienen. Dabei sind zwischen je zwei verlängert ausgebildeten Kontaktblechen 3 jeweils genau ein PTC-Element 2 vorgesehen. Ferner sind ein oder zwei Wellrippen 6 und ein oder zwei nicht verlängert ausgebildete Kontaktbleche 3 zwischen je zwei verlängert ausgebildeten Kontaktblechen 3 vorgesehen. Zwischen zwei benachbarten, verlängert ausgebildeten Kontaktblechen 3 der Baugruppen 11 und 12 liegt eine Spannung von 13 V an, die Spannung kann jedoch auch größer sein, beispielsweise 24 V oder 48 V. Die in Fig. 1 dargestellten Baugruppen bilden die Niederspannungsbaugruppen einer erfindungsgemäßen Heizanordnung, die über die Bordnetzspannung versorgt werden.

Jede der Baugruppen 11 und 12 bildet, auf Grund der gemeinsamen elektrischen Kontaktierung der einzelnen PTC-Elemente jeder Baugruppe ein voneinander unabhängig geregeltes Heizteil. Natürlich ist, insbesondere für eine einzonige Klimaanlage, auch eine einfache, gemeinsame Regelung der beiden Baugruppen 11 und 12 möglich.

Um die zuvor beschriebene Anordnung der Niederspannungsbaugruppen 11 und 12 ist gemäß Fig. 2 ein zweiteiliger Kunststoff-Rahmen 9, vorliegend aus Polyamid, angeordnet, wobei die beiden Rahmenelemente mittels Clipsverbindungen miteinander verbunden sind. Für die Montage werden die beiden Baugruppen 11 und 12 in dieses Rahmenelement eingelegt, wobei sie beabstandet voneinander angeordnet sind. Der Rahmen 9 weist eine als Trennwand dienende Querstrebe 15 auf, welche zwei benachbarte Baugruppen voneinander räumlich, thermisch und/oder elektrisch voneinander trennt. Die Querstrebe 15 ist bevorzugt in einer Symmetrieebene des Rahmens angeordnet.

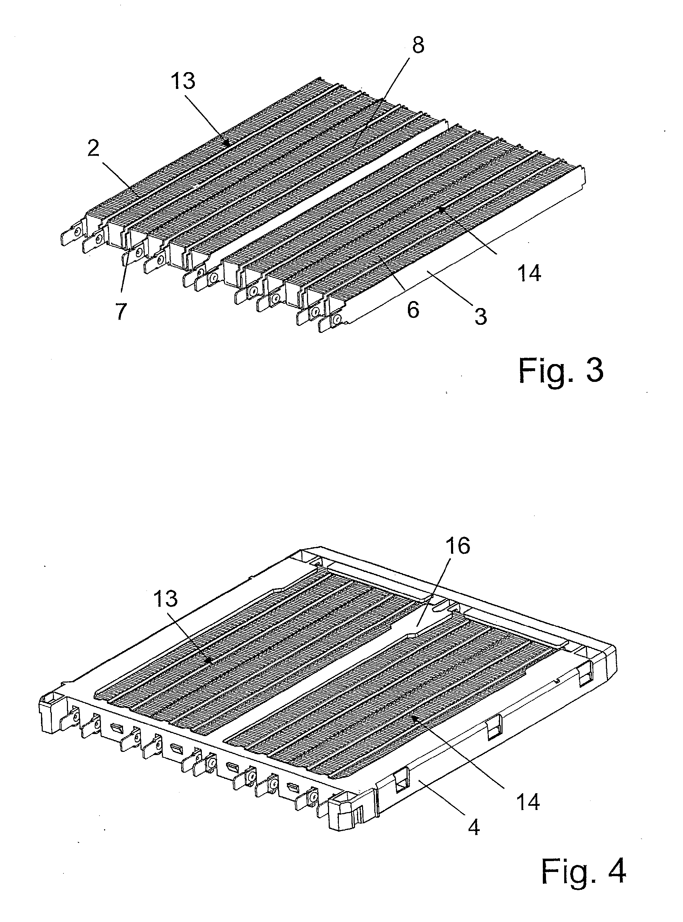

Entsprechend den Figuren 1 und 2 ist in den Figuren 3 und 4 ein Teil einer erfindungsgemäßen Heizungsanordnung 1 mit den Baugruppen 13 und 14 dargestellt, die über die Netzspannung, beispielsweise 230 V versorgt werden und demnach die Hochspannungsbaugruppen der Heizungsanordnung 1 bilden. Der Aufbau der einzelnen Baugruppen 13 und 14 ist im Wesentlichen identisch mit dem der in Fig. 1 und 2 erläuterten Baugruppen 11 und 12. Jedoch sind die PTC-Elemente 2 der Baugruppen 13 und 14, angepasst an die Netzspannung ausgelegt und somit vorteilhafterweise unterschiedlich zu den PTC-Elementen 2 der Niederspannungsbaugruppen 11 und 12 ausgebildet. Fig. 4 zeigt analog zu Fig. 2 die Anordnung der Hochspannungsbaugruppen 13 und 14 in einem Rahmen 4, der im Wesentlichen gleich wie der Rahmen 9 für die Niederspannungsbaugruppen ausgeführt ist.

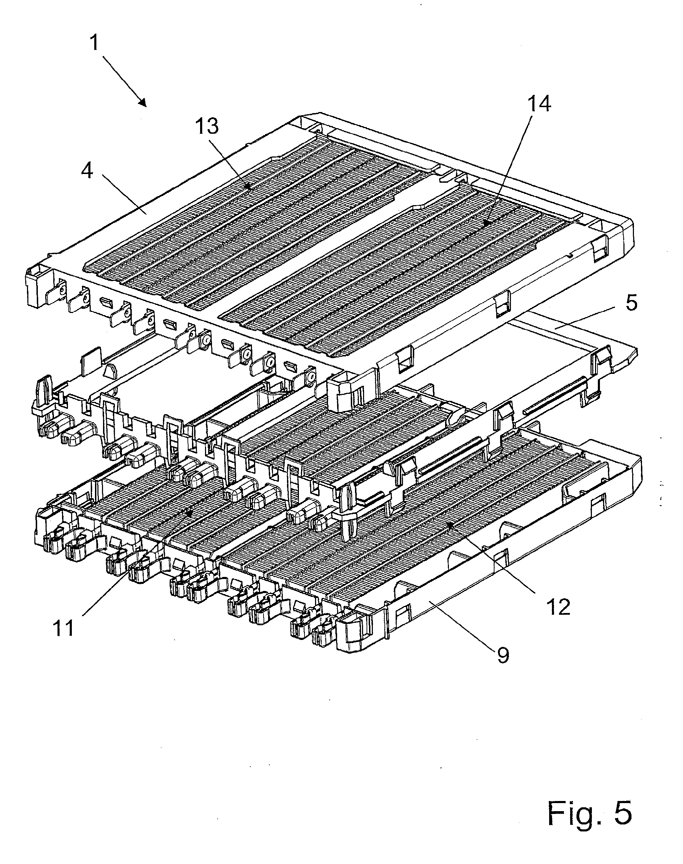

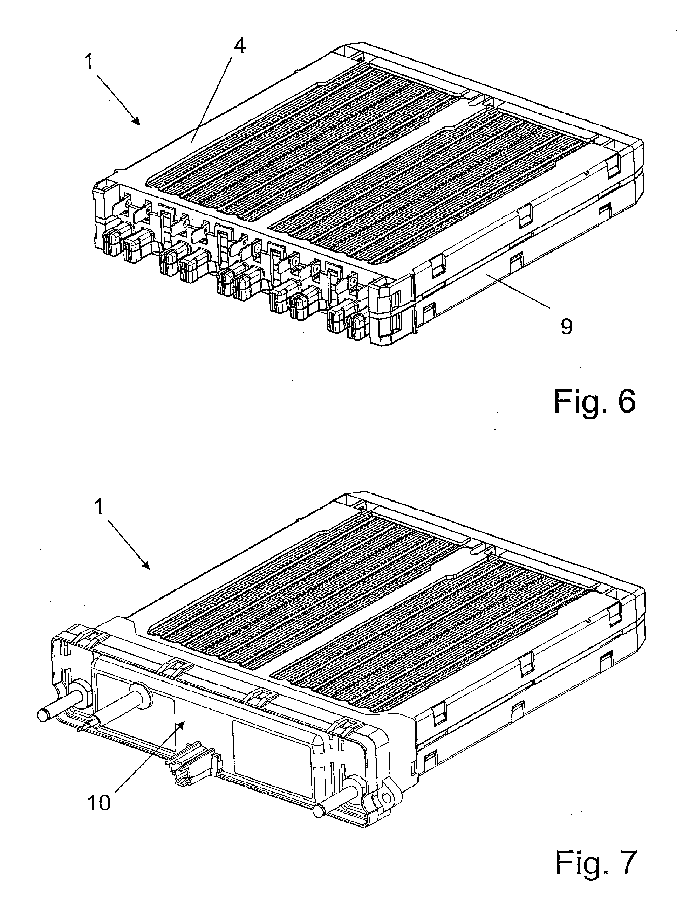

Fig. 5 zeigt die Heizungsanordnung 1 im vormontierten Zustand nach Art einer Explosionsdarstellung. Zwischen den im Rahmen 4 eingefassten Hochspannungsbaugruppen 13 und 14 und den im Rahmen 9 eingefassten Niederspannungsbaugruppen 11 und 12 ist ein Zwischenrahmen 5 angeordnet. Der Zwischenrahmen 5 ist so ausgeführt, dass dieser die beiden Rahmen 4 und 9 im dargestellten Ausführungsbeispiel über eine Clipsverbindung miteinander zu einer kompakten Gesamteinheit wie sie in Fig. 6 dargestellt ist, verbindet. Die Baugruppen 11, 12, 13 und 14 sind dabei in den Rahmen 4 und 9 so angeordnet, dass sie voneinander elektrisch und/oder thermisch isoliert sind. Mittels des Zwischenrahmens 5 wird auch sichergestellt, dass die Niederspannungsbaugruppen 11 und 12 von den Hochspannungsbaugruppen 13 und 14 elektrisch isoliert sind. Der Zwischenrahmen 5 kann alternativ ebenfalls eine Querstrebe in der Symmetrieebene gemäß den Rahmen 4 und 9 aufweisen.

Wie aus Fig. 6 ersichtlich ist, ragen die Elemente zur Kontaktierung 7 mit ihren äußeren Enden über die Rahmen 9, 4 und den Zwischenrahmen 5 hinaus. An diesen Enden liegen entsprechenden Kontaktschienen an, die in einer seitlichen Abdeckung 10, dargestellt in Fig. 7, der Kunststoff-Rahmen 4 und 9 vorgesehen sind, und die eine gemeinsame elektrische Kontaktierung der einzelnen Heizstränge 8, jeweils der Nieder- und Hochspannungsbaugruppen ermöglichen. Um eine sichere Kontaktierung zu gewährleisten, können an den Elemente zur Kontaktierung Federzungen vorgesehen sein. Die Abdeckung 10 wird seitlich aufgesteckt und mittels weiterer Clipsverbindungen an den beiden Rahmenelementen gehalten. Der vollständig zusammengebaute Zustand ist in Fig. 7 dargestellt.

Die Nieder- und Hochspannungsbaugruppen sind in Strömungsrichtung der zu erwärmenden Luft unmittelbar hintereinander angeordnet und mittels der Rahmen 9 und 4 und des Zwischenrahmens 5 zu einer sehr kompakten Heizanordnung 1 zusammengeführt.

Die einzelnen Heizstränge 8 können hierbei als Standard-Elemente dienen, welche in unterschiedliche Rahmen 4 und 9 eingesetzt werden können, wodurch die Herstellungskosten verringert werden. Dabei sind vorliegend die Heizstränge 8 jeweils der Nieder- und Hochspannungsbaugruppen identisch ausgebildet. Jede Baugruppe besteht aus Unterbaugruppen, so dass die Herstellungskosten weiter gesenkt werden können.

Die in Längsrichtung der PTC-Elemente 2 verlaufende Querstrebe 15 und 16 in den Rahmen 9 und 4 dient zum Einen der Stabilisierung und zum Anderen der räumlichen Trennung der beiden Baugruppen. Durch die Trennung der Baugruppen, die unabhängige Ansteuerungsmöglichkeit und die Querstreben 15 und 16 ist die Heizanordnung vorteilhaft für eine zweizonige Klimaanlage einsetzbar.

Zur Realisierung einer vierzonigen Klimaanlage, kann in den Rahmen 4 und 9 kann auch eine senkrecht zu den PTC-Elementen angeordnete Querstrebe eingesetzt werden. Dabei sind je zwei Zonen der Klimaanlage auf Grund des Vorhandenseins von jeweils nur zwei Baugruppen für Nieder- und Hochspannungsteil miteinander gekoppelt, d.h. die fahrerseitige Klimatisierung von Front und Fond sowie die beifahrerseitige Klimatisierung von Front und Fond sind miteinander gekoppelt. Dies hat, da der Zuheizer im Wesentlichen nur eine Hilfsfunktion hat, keine wesentliche Beeinträchtigung des Komforts zur Folge. Prinzipiell ist jedoch auch das Vorsehen von je vier Baugruppen möglich, entsprechend den vier Zonen. Auch in diesem Fall können spiegelbildlich ausgebildete oder identische Baugruppen verwendet werden, wobei die elektrische Kontaktierung bevorzugt von beiden Seiten erfolgt.

### Bezugszeichenliste

- 1: Heizungsanordnung
- 2: PTC-Element
- 3: Kontaktblech
- 4: Rahmen
- 5: Zwischenrahmen
- 6: Wellrippe
- 7: Element zur Kontaktierung
- 8: Heizstrang
- 9: Rahmen
- 10: Abdeckung
- 11, 12: Niederspannungsbaugruppe
- 13, 14: Hochspannungsbaugruppe
- 15, 16: Querstrebe

## Patentansprüche

1. Heizungsanordnung (1), insbesondere für ein Kraftfahrzeug, die zumindest zwei Baugruppen (11, 12, 13, 14) umfasst, wobei eine Baugruppe zumindest einen Heizstrang (8) umfasst, mit zumindest einem elektrischen Heizelement, insbesondere PTC-Element (2), Kontaktelementen und zumindest einem Element zur Wärmeübertragung, **dadurch gekennzeichnet, dass** zumindest eine erste Baugruppe (11, 12) von einer Niederspannungsquelle und zumindest eine zweite Baugruppe (13, 14) von einer Hochspannungsquelle versorgt wird.

2. Heizungsanordnung nach Anspruch 1, **dadurch gekennzeichnet, dass** ein Heizstrang (8) eine Mehrzahl von Heizelementen (2) aufweist.

3. Heizungsanordnung nach Anspruch 1 oder 2 **dadurch gekennzeichnet, dass**, ein Heizelement (2) zwischen zwei Kontaktelementen (3) angeordnet ist.

4. Heizungsanordnung nach einem der vorhergehenden Ansprüche, **dadurch gekennzeichnet, dass**, die Kontaktelemente in Form von Kontaktblechen (3) ausgebildet sind.

5. Heizungsanordnung nach einem der vorhergehenden Ansprüche, **dadurch gekennzeichnet, dass**, die Elemente zur Wärmeübertragung als Wellrippen (6) oder als Bleche, die im Wesentlichen senkrecht zur Längsrichtung der Heizelemente (2) angeordnet sind, ausgebildet sind.

6. Heizungsanordnung nach einem der vorhergehenden Ansprüche, **dadurch gekennzeichnet, dass** die Niederspannungsquelle eine Kraftfahrzeugbordnetzspannung ist.

7. Heizungsanordnung nach einem der vorhergehenden Ansprüche, **dadurch gekennzeichnet, dass** die Hochspannungsquelle eine Netzspannung ist.

8. Heizungsanordnung nach einem der vorhergehenden Ansprüche, **dadurch gekennzeichnet, dass** die Niederspannungsquelle eine Spannung von 12 ± 2 V bis 14 ± 2, 24± 2 V oder 48 ± 2 aufweist.

9. Heizungsanordnung nach einem der vorhergehenden Ansprüche, **dadurch gekennzeichnet, dass** die Hochspannungsquelle eine Spannung von 110 ± 10 V oder 230 ± 20 V aufweist.

10. Heizungsanordnung nach einem der vorhergehenden Ansprüche **dadurch gekennzeichnet, dass** zumindest zwei Baugruppen (11, 12, 13, 14) zu einer Baueinheit zusammengefasst oder miteinander verbunden sind.

11. Heizungsanordnung nach einem der vorhergehenden Ansprüche, **dadurch gekennzeichnet, dass** zumindest zwei Baugruppen (11, 12, 13, 14) von einem Halteelement oder Rahmen (4, 9) gehalten werden.

12. Heizungsanordnung nach einem der vorhergehenden Ansprüche, **dadurch gekennzeichnet, dass** die Niederspannungsbaugruppen (11, 12) und Hochspannungsbaugruppen (13, 14) von voneinander getrennten Halteelementen oder Rahmen (4, 9) gehalten werden und/oder in diese eingelegt sind.

13. Heizungsanordnung nach einem der vorhergehenden Ansprüche, **dadurch gekennzeichnet, dass** die Halteelemente oder Rahmen (4, 9) miteinander verbunden sind.

14. Heizungsanordnung nach einem der vorhergehenden Ansprüche, **dadurch gekennzeichnet, dass** die Halteelemente oder Rahmen (4, 9) über ein Verbindungselement, insbesondere einen Zwischenrahmen (5) miteinander verbunden sind.

15. Heizungsanordnung nach einem der vorhergehenden Ansprüche, **dadurch gekennzeichnet, dass** Niederspannungsbaugruppen (11, 12) und Hochspannungsbaugruppen (13, 14) elektrisch voneinander isoliert sind durch die Fixierung mittels der Halteelemente oder Rahmen (4, 9) und/oder des Verbindungselements oder des Zwischenrahmens (5).

16. Heizungsanordnung nach einem der vorhergehenden Ansprüche, **dadurch gekennzeichnet, dass** die Halteelemente oder Rahmen (4, 9) und/oder das Verbindungselement oder der Zwischenrahmen 5 aus Kunststoff bestehen.

17. Heizungsanordnung nach einem der vorhergehenden Ansprüche, **dadurch gekennzeichnet, dass** zumindest zwei Niederspannungsbaugruppen (11, 12) spiegelbildlich angeordnet und/oder im Wesentlichen gleich aufgebaut sind.

18. Heizungsanordnung nach einem der vorhergehenden Ansprüche, **dadurch gekennzeichnet, dass** zumindest zwei Hochspannungsbaugruppen (13, 14) spiegelbildlich angeordnet und/oder im Wesentlichen gleich aufgebaut sind.

19. Heizungsanordnung nach einem der vorhergehenden Ansprüche, **dadurch gekennzeichnet, dass** der Rahmen (4, 9) eine als Trennung dienende Querstrebe (15, 16) aufweist, welche zwei benachbarte Baugruppen voneinander räumlich trennt.

20. Heizungsanordnung nach einem der vorhergehenden Ansprüche, **dadurch gekennzeichnet, dass** das der Zwischenrahmen (5) eine als Trennung dienende Querstrebe aufweist, welche im Wesentlichen fluchtend zu einer Querstrebe (15, 16) eines Rahmens (4, 9) angeordnet ist.

21. Heizungsanordnung nach einem der vorhergehenden Ansprüche, **dadurch gekennzeichnet, dass** die Querstrebe in einer Symmetrieebene des Rahmens (4, 9) und/oder des Zwischenrahmens (5) angeordnet ist.

22. Heizungsanordnung nach einem der vorhergehenden Ansprüche, **dadurch gekennzeichnet, dass** eine zweite Querstrebe senkrecht zu einer ersten, parallel zu den Baugruppen (11, 12, 13, 14) verlaufenden Querstrebe (15, 16) vorgesehen ist.

23. Heizungsanordnung nach einem der vorhergehenden Ansprüche, **dadurch gekennzeichnet, dass** ein die Baugruppen (11, 12, 13, 14) umgebender Rahmen (4, 9) aus mindestens zwei Rahmenelementen besteht.

24. Heizungsanordnung nach einem der vorhergehenden Ansprüche, **dadurch gekennzeichnet, dass** die Rahmenelemente mittels Clipsverbindungen miteinander verbunden sind.

25. Heizungsanordnung nach einem der vorhergehenden Ansprüche, **dadurch gekennzeichnet, dass** die Baugruppe (11, 12, 13, 14) mindestens zwei Wellrippen (6) aufweist, welche auf der Außenseite zweier Kontaktbleche (3) zwischen denen ein PTC-Element (2) vorgesehen ist, angeordnet ist.

26. Heizungsanordnung nach einem der vorhergehenden Ansprüche, **dadurch gekennzeichnet, dass** die Heizungsanordnung (1) mindestens je zwei unabhängige Baugruppen (11, 12, 13, 14) oder Heizstränge (8) für den Niederspannungsteil und den Hochspannungsteil der Heizungsanordnung (1) umfasst, wobei ein oder mehrere Baugruppen (11, 12, 13, 14) oder Heizstränge (8) einer oder zwei Klimazonen einer mehrzonigen Klimaanlage zugeordnet sind.
